# EUROPÄISCHE PATENTANMELDUNG

(11) **EP 0 613 799 A1**
(43) Veröffentlichungstag der Anmeldung: **07.09.1994**
(21) Anmeldenummer: 94102538.9
(22) Anmeldetag: 19.02.1994
(51) Int. Cl.: B60J 7/06

(54) **Faltdach eines Fahrzeuges**

(30) Priorität: 02.03.1993 DE 4306451
(71) Anmelder: WEBASTO KAROSSERIESYSTEME GmbH, D-82131 Stockdorf (DE)
(72) Erfinder: Reihl, Peter, D-82319 Starnberg (DE); Schüch, Siegmund, D-81669 (DE); Miklosi, Stefan, D-81247 München (DE)
(74) Vertreter: Wiese, Gerhard

(57) **Zusammenfassung**

Die Erfindung betrifft ein Faltdach eines Fahrzeuges mit einem Verdeck (3) aus flexiblem Material, verschiebbaren Querspriegeln (4,5) und Zwischenspriegeln (7a,b,c) sowie aus Führungsschienen (8) aushebbaren Faltspriegeln (6a,b,c). Das erfindungsgemäße Faltdach soll auch bei starker Dachwölbung und nicht parallelen Führungsschienen verwendbar sein. Zu diesem Zweck sind Gleitelemente (9abc,10abc), die für eine Längsverschiebbarkeit der Spriegel in den Führungsschienen (8) geführt sind, mit zusätzlichen Lagerungen (22,23) versehen, die eine Relativbewegung der Spriegel zu den Gleitelementen nach außen ermöglicht. Es wird ferner ein faltbares Gliederband (13,14) beschrieben, das besonders vorteilhaft mit einfachen Mitteln eine geregelte Faltenbildung ermöglicht.

## Beschreibung

Die Erfindung betrifft ein Faltdach eines Fahrzeuges zum wahlweisen Verschließen oder wenigstens teilweisem Freigeben einer in einer festen Dachhaut vorgesehenen Dachöffnung gemäß dem Oberbegriff des Patentanspruchs 1. Sie betrifft ferner ein faltbares Gliederband gemäß Anspruch 11, das bevorzugt bei einem erfindungsgemäßen Faltdach einsetzbar ist, jedoch darüberhinaus auch bei anderen Faltdächern.

Ein gattungsgemäßes Faltdach mit einem Verdeck aus flexiblem Material, das an einem vorderen Querspriegel, einem hinteren Querspriegel sowie wenigstens einem zwischen diesen angeordneten Faltspriegel befestigt ist, und bei dem auch ferner bei einem Öffnungsvorgang in Führungsschienen verbleibende Zwischenspriegel vorgesehen sind, ist aus der DE-PS 916 497 bekannt. Dieses Faltdach weist zwei parallele Führungsschienen auf, die nahe ihrem hinteren Ende an der Oberseite eine einzige Aussparung aufweisen, durch die sich beim Öffnung zunächst der hintere Faltspriegel und dann der Reihe nach auch alle davorliegenden über die feste Dachhaut erheben. Zum Einbau in stark gewölbte und/oder trapezförmig der Dachkontur angepaßte Dächer ist dieses Dach nicht geeignet.

Aus der DE-PS 819 639 ist ein nicht gattungsgemäßes Schiebedach mit nicht parallelen Führungsschienen bekannt, bei dem ein verschiebbares festes Dachteil auf Grund seiner Flexibilität beim Nachhintenschieben einen Breitenausgleich dadurch vornimmt, daß es sich stärker nach oben aufwölbt. Abgesehen von dem ungünstigen optischen Eindruck, den ein derartiges geöffnetes Schiebedach vermittelt, ist mit einem solchen Dach auf Grund des unter dem aufgewölbten Dach angreifenden Fahrtwindes ein Fahren bei mittleren oder höheren Geschwindigkeiten nicht möglich.

Der Erfindung liegt die Aufgabe zugrunde, ein Faltdach bereitzustellen, das auch bei starken Dachwölbungen und/oder nicht parallelen Führungsschienen einsetzbar ist. Darüberhinaus soll durch ein neuartiges, die Spriegel verbindendes Gliederbandsystem ein einfaches, geordnetes Auf- und Zufalten ohne zusätzliche Steuermittel ermöglicht werden.

Diese Aufgaben werden erfindungsgemäß durch die kennzeichnenden Merkmale des Patentanspruchs 1 sowie die zweite Teilaufgabe durch die Merkmale des nebengeordneten Patentanspruchs 11 gelöst.

Dadurch, daß die die Falt- und Zwischenspriegel lagernden Gleitelemente zusätzlich zu ihren mit den Führungsschienen im Eingriff stehenden Gleitführungen Lagerungen aufweisen, an denen sich die Spriegel bei einem Dach mit nicht parallelen Führungsschienen bei einer Bewegung von der breiten zur schmalen Stirnseite der Dachöffnung hin relativ zu den Gleitelementen nach außen bewegen können, ist eine Anpassung an nahezu jede Dachkontur möglich.

In einer bevorzugten Ausführungsform sind die Lagerungen an den Gleitelementen als quer zur Fahrzeuglängsachse verlaufende Führungen ausgebildet.

In einer alternativen Ausgestaltung sind die Lagerungen an den Gleitelementen der Zwischenspriegel als Schlitze ausgebildet, in denen nahe dem äußeren Ende an den Zwischenspriegeln angelenkte Ausstellhebel mit ihrem anderen Ende drehbar gelagert und in Öffnungsrichtung des Verdecks mit einer quer zur Fahrtrichtung, vorzugsweise nach außen und optional einer nach oben gerichteten Komponente bewegbar sind. Mittels einer derartigen, mit Ausstellhebeln versehenen Anordnung, bei der die Zwischenspriegel beim Öffnen mit angehoben werden, kann das Verdeck auch an den Zwischenspriegeln befestigt werden. Dadurch ist in allen Zwischenzuständen beim Öffnen des Verdecks stets eine hinreichende Verdeckspannung vorhanden, sodaß kein Flattern der Verdeckfalten auftritt. In geschlossenem Zustand ist bei Befestigung des Verdecks sowohl an den Falt- als auch an den Zwischenspriegeln auf Grund der kurzen Abstände der Verdeckbefestigung an den Spriegeln ein seitliches Eingreifen wirksam verhindert.

Bei der ersten vorteilhaften Variante mit quer zur Fahrzeuglängsrichtung verlaufenden Gleitführungen für die Spriegel ist es vorteilhaft, wenn in den Führungsschienen in Öffnungsrichtung des Verdecks für jedes der die Faltspriegel führenden Gleitelemente um einen geringen Weg von der Grundposition bei geschlossenem Verdeck versetzt eine Aussparung vorhanden ist, die den Durchtritt des Faltspriegels bereits nach kurzem Gleitweg ermöglicht. Dadurch wird ein unnötig langes Gleiten der Verdeckseitenkanten auf der umgebenden festen Dachhaut vermieden, das bei herkömmlichen Faltdächern häufig zu vorzeitigem Verkratzen des Lacks bzw. Durchscheuern des Verdecks führt. Bei einer solchen Anordnung ist es ferner vorteilhaft, daß die Faltspriegel mit den ihnen zugeordneten Gleitelementen bei Erreichen ihrer Position unter der jeweiligen Aussparung vor dem Abheben aus den Führungsschienen mittels eines Rastmechanismus' verrastet werden. Durch diese Maßnahme ist gewährleistet, daß sich beim Schließen des Verdecks die Gleitelemente wieder sicher durch die Aussparungen in die Führungsschienen einfädeln. Für eine solche Verrastung der Faltspriegel mit den Gleitelementen ist vorteilhaft ein selbsttätig arbeitender Rastmechanismus etwa in Form eines Kugeldruckmechanismus verwendbar.

Ein besonders sicheres Aus- und Einfädeln der Faltspriegel-Gleitelemente wird dadurch erreicht, daß der hintere Querspriegel mit der festen Dachhaut verbunden ist und mit dem hinteren Zwischenspriegel über eine in Öffnungsrichtung des Verdecks wirkende Zugfeder verbunden ist, die letzteren bei Beginn der Verdecköffnung um den kurzen Weg der Faltspriegel-Gleitelemente zu ihren Aussparungen nach hinten zieht. Die Anlenkung der Zugfeder erfolgt dabei besonders vorteilhaft über die Ketten aus Gliederbändern, sodaß bei einem Lösen des vorderen Querspriegels vom Rahmen alle Faltspriegel-Gleitelemente unter die ihnen zugeordnete Aussparung gezogen werden. Somit kann mit dem Anlaufen des Antriebes für ein Verschieben des vorderen Querspriegels nach hinten sofort mit der Bildung der ersten Falte begonnen werden. Beim Schließen wird durch die Zugfeder gewährleistet, daß die Faltspriegel-Gleitelemente bis zum Eintauchen in die Führungsschiene über den Aussparungen bleiben.

Eine weitere vorteilhafte Ausgestaltung der Erfindung sieht vor, daß sich die Nebengelenke, an denen zwei Gliederbänder im Bereich der Faltspriegel gelenkig miteinander verbunden sind, außer beim vorderen Faltspriegel im aufgefalteten Zustand unterhalb der Faltspriegel befinden. Durch diese Maßnahme wird erreicht, daß die nach unten durchhängenden Verdeckschlaufen stets einen hinreichenden Abstand zur festen Dachhaut haben, wodurch ein Schleifen auf derselben verhindert wird.

Eine weitere verdeckschonende Maßnahme, die insbesondere bei einem vorliegendem Faltdach, vorteilhaft jedoch auch bei jedem anderen Faltdach einsetzbar ist, liegt darin, zwischen hinterem Zwischenspriegel und hinterem Querspriegel einen vorzugsweise am letzteren gelagerten, mit einer nach oben gerichteten federnden Vorspannung an der Innenseite des Verdecks anliegenden, ein Einquetschen des hinteren Verdeckteils beim Falten verhindernden Verdeckausheber anzuordnen. Durch diesen Verdeckausheber, der rein auf Grund einer Feder ohne zusätzliche mechanische Teile selbsttätig arbeitet, wird bei Nachlassen der Verdeckspannung beim Öffnen hinter der hintersten Hauptfalte eine kleine Nebenfalte nach oben gebildet, die wirksam verhindert, daß sich das Verdeck zwischen letzter Falte und fester Dachhaut einquetscht.

Insbesondere zur Verwendung bei einem erfindungsgemäßen Faltdach, jedoch auch bei anderen Gegenständen, die eine geregelte Faltenbildung mit einfachen Mitteln erfordern, ist ein faltbares Gliederband geeignet, das aus einer Kette von flachen, in sich steifen streifenförmigen Gliedern besteht, von denen zwei sich benachbarte Glieder abwechselnd über ein einfaches scharnierartiges Nebengelenk oder ein Hauptgelenk verbunden sind, bei welch letzterem für jedes der daran angelenkten Glieder ein an einem Träger befestigtes Lager sowie eine zwischen diesen Lagern angeordnete wippenförmige Sperrklinke vorgesehen ist, die das in Bewegungsrichtung hintere Glied durch Zusammenwirken mit einem an diesem in Bereich des Lagers vorgesehenen kreisringsegmentförmigen Sperrgliedes solange in einer gestreckten Lage gegen ein Auffalten blockiert, bis das in Bewegungsrichtung davor- liegende Glied durch seine eigene Auffaltbewegung ein ebensolches Sperrglied in eine Position gedreht hat, die eine Schwenkbewegung der Sperrklinke ermöglicht. Ein derartiges faltbares Gliederband ermöglicht mit einfachsten Mitteln ohne zusätzliche fremdbetätigte Steuerglieder eine Verriegelung aller an den Haupt- und Nebengelenken miteinander verbundenen Spriegel in gestreckter Lage und zum anderen ein geregeltes Auffalten in der Bewegungsrichtung des ersten angetriebenen Spriegels beginnend, sodaß jeweils eine vollendet ausgeführte Auffaltbewegung zweier in einem Nebengelenk miteinander verbundener Spriegel die Bedingung dafür schafft, daß das nächste Gliederbandpaar für eine Auffaltbewegung entriegelt wird.

Bei Verwendung in Verbindung mit einem erfindungsgemäßen Faltdach sind diese Nebengelenke den Faltspriegeln und die Hauptgelenke den Zwischenspriegeln zugeordnet.

Ein Hauptgelenk eines solchen faltbaren Gliederbandes läßt sich in einfacher Weise dadurch realisieren, daß der Träger des Hauptgelenks den jeweiligen Zwischenspriegel unter Anpassung an dessen Form von unten her umgibt und zwei sich horizontal etwa in halber Höhe des Zwischenspriegels nach vorn und hinten erstreckende Schenkel aufweist, an denen je ein Lager für ein Gliederbandelement angeordnet ist. Die Sperrklinken des faltbaren Gliederbandes sind entweder an diesen Träger oder alternativ dazu in einer bevorzugten Ausführungsform mittels einer Ausklinkung an der Unterseite der Zwischenspriegel im Inneren derselben gelagert.

Nachfolgend werden Ausführungsbeispiele der Erfindung an Hand der Zeichnung beschrieben. Es zeigt:
- Fig. 1: Eine schematische Draufsicht auf eine Hälfte eines Faltdachs unter Weglassung des Verdecks,
- Fig. 2: einen Längsschnitt in Höhe des Gliederbandelementd im hinteren Teil des Daches bei vollständig geöffnetem Verdeck,
- Fig. 3: einen Teillängsschnitt im Bereich des Gliederbandes mit der Arretierung des Faltdachs am vorderen Rahmenquerholm,
- Fig. 4: einen schematischen Querschnitt durch ein Gleitelement eines Faltspriegels mit einer Rasteinrichtung,
- Fig. 5: einen Teillängsschnitt durch die Anlenkung des hinteren Zwischenspriegels am hinteren Querspriegel,
- Fig. 6: einen Teillängsschnitt durch ein Hauptgelenk im Bereich des vorderen Zwischenspriegels bei geschlossenem Verdeck,
- Fig. 7: einen Teillängsschnitt durch das Hauptgelenk gemäß Fig. 6 nach Bildung der davorliegenden ersten Verdeckfalte,
- Fig. 8: eine schematische Draufsicht auf eine zweite Ausführungsvariante eines Faltdaches unter Weglassung der Faltspriegel und
- Fig. 9: einen Teilquerschnitt durch ein Gleitelement eines Zwischenspriegels gemäß der Schnittlinie IX-IX in Fig. 8.

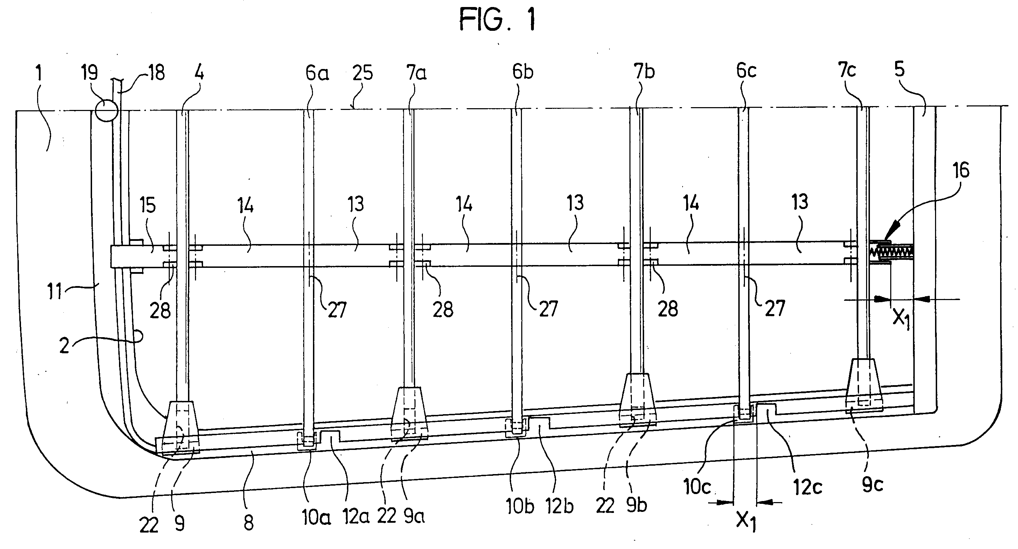

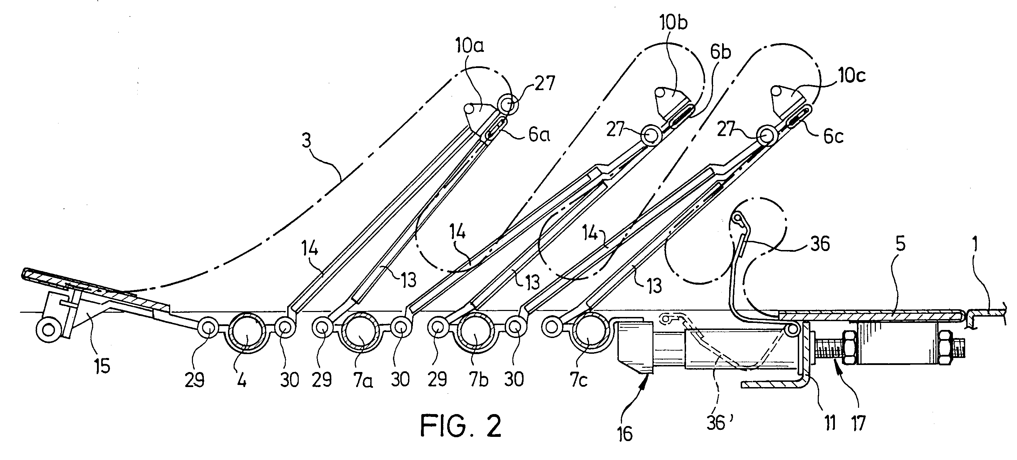

In Fig. 1 ist mit 1 die feste Dachhaut eines Fahrzeugdaches bezeichnet, das in Fahrtrichtung gesehen vorne breiter als hinten ist und dementsprechend insgesamt eine trapezförmige Fläche bildet. In die feste Dachhaut 1 ist eine Dachöffnung 2 eingeschnitten, die durch das Verdeck 3 (Fig. 2) eines Faltdachs verschließbar und durch Öffnung von vorne her weitgehendst freilegbar ist. Das gesamte Faltdach ist an einem Dachrahmen 11 angeordnet, der in die feste Dachhaut 1 eingesetzt ist und mit seiner Innenkante die freie Dachöffnung 2 bestimmt. Das Verdeck 3 ist mit einem mit einem vorderen Querspriegel 4 verbundenen Teil 15, mit einem hinteren Querspriegel 5 und mit drei, zwischen diesen beiden angeordneten Faltspriegeln 6a, 6b, 6c, verbunden. Zwischen den Faltspriegeln 6a, 6b und 6c sowie zwischen hinterem Faltspriegel 6c und hinterem Querspriegel 5 erstreckt sich jeweils ein ebenfalls quer zur Fahrtrichtung verlaufender Zwischenspriegel 7a, 7b, 7c. Diese Zwischenspriegel 7a, 7b und 7c weisen beim ersten Ausführungsbeispiel gemäß Fig. 1 bis 7 keine Verbindung zum Verdeck 3 auf.

Der vordere Querspriegel 4 und die Zwischenspriegel 7a, 7b, 7c sind seitlich in Gleitelementen 9, 9a, 9b, 9c gelagert, die ihrerseits wiederum an seitlich der Dachöffnung 2 am Rahmen 11 angeordneten Führungsschienen 8 längs verschiebbar gelagert sind. Auf Grund der trapezförmigen Form des gesamten Daches sowie der daran angepaßten Dachöffnung 2 laufen diese Führungsschienen 8 nicht parallel zueinander, sondern von vorne nach hinten entsprechend den Seitenkanten eines Trapezes zu. Da sich die Gleitelemente 9, 9a, 9b, 9c bei einer Öffnung des Verdecks von vorne nach hinten bei ihrer Längsverschiebung in den Führungsschienen 8 der Fahrzeugmitte annähern, sind die von ihnen gelagerten Spriegel 4, 7a, 7b und 7c mit ihren Enden in quer zur Fahrtrichtung verlaufenden Gleitführungen verschiebbar gelagert.

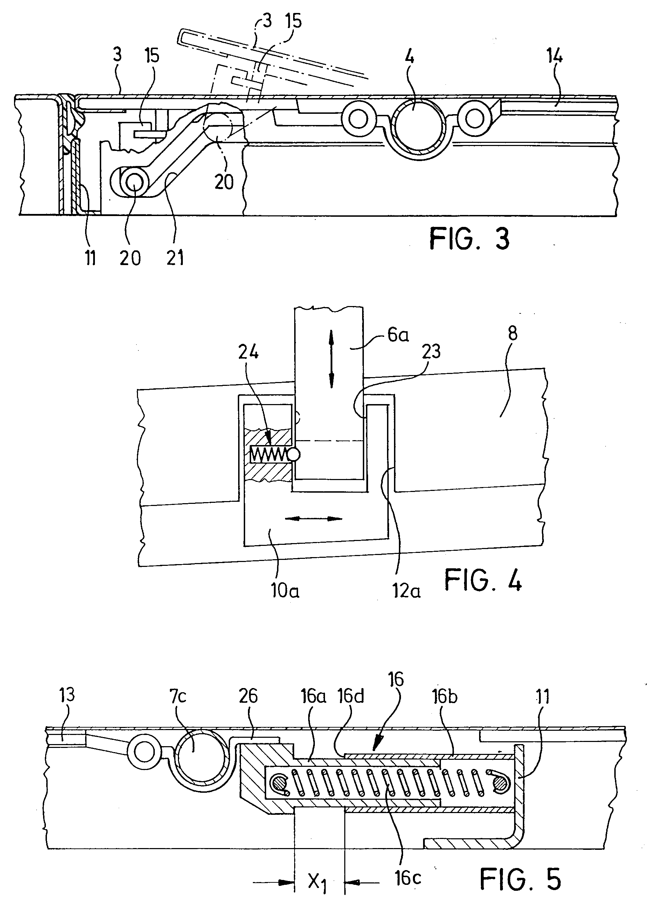

Auch die Faltspriegel 6a, 6b und 6c sind seitlich an Gleitelementen 10a, 10b, 10c gelagert, die an den Führungsschienen 8 längs verschiebbar gelagert sind. Von der in Fig. 1 gezeigten Grundstellung mit geschlossenem Verdeck 3 ausgehend befindet sich in geringem Abstand hinter jedem Gleitelement 10a, 10b, 10c an der Führungsschiene 8 in deren oberer Abdeckung eine Aussparung 12a, 12b, 12c, deren Größe so bemessen ist, daß sie den Durchtritt der Gleitelemente 10a, 10b, 10c gestatten. Wie vergrößert in Fig. 4 dargestellt und weiter unten detailliert beschrieben, können auch die Enden der Faltspriegel 6a, 6b, 6c in den jeweiligen Gleitelementen 10a, 10b, 10c quer zur Fahrtrichtung verschiebbar gelagert sein. Da der Verschiebeweg der Gleitelemente 10a, 10b, 10c auf den kurzen Weg von der in Fig. 1 gezeigten Grundstellung bis zum Erreichen der unmittelbar dahinterliegenden Aussparung 12a, 12b bzw. 12c beschränkt ist, legen die Enden der Faltspriegel 6a, 6b, 6c in den entsprechenden Gleitführungen der Gleitelemente 10a, 10b, 10c zum Ausgleich dieser Längsverschiebung nur einen geringen Querverschiebeweg zurück. Bei einer geringen Breitenveränderung der Dachöffnung 2 können die Faltspriegel 6a, 6b, 6c auch starr an den Gleitelementen (10a, 10b, 10c) befestigt werden. Der Ausgleich erfolgt dann über das Lagerspiel.

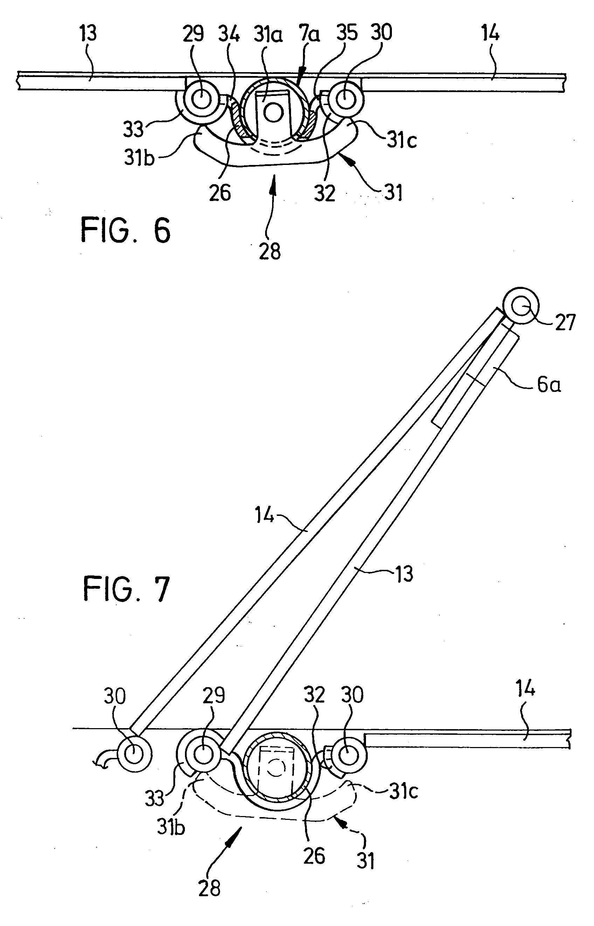

Der vordere Querspriegel 4 ist mit dem dahinterliegenden Faltspriegel 6a ebenso wie der Zwischenspriegel 7a mit dem darauffolgenden Faltspriegel 6b und der Zwischenspriegel 7b mit dem dahinterliegenden Faltspriegel 6c über ein ein Teil einer Gliederbandkette bildendes Gliederbandelement 14 verbunden. Der vordere Faltspriegel 6a ist mit dem dahinterliegenden ersten Zwischenspriegel 7a, der zweite Faltspriegel 6b mit dem dahinterliegenden Zwischenspriegel 7b und der hintere Faltspriegel 6c mit dem hinteren Zwischenspriegel 7c über ein Gliederhandelement 13 verbunden, wobei sich die Gliederbandelemente 13 von den Gliederbandelementen 14 nur im Bereich ihrer Lagerungen unterscheiden. Diese Unterschiede werden weiter unten in Verbindung mit der Beschreibung der Fign. 6 und 7 detailliert herausgearbeitet.

Am vorderen Querspriegel 4 ist ein Schließteil 15 schwenkbar angelenkt, das im geschlossenen Zustand der Verbindung des Faltdaches mit dem vorderen Querholm des Dachrahmens 11 dient. Im Detail ist diese Verbindung in Fig. 3 gezeigt.

Der hintere Zwischenspriegel 7c ist mit dem hinteren Querspriegel 5, welcher mit dem festen Dach 1 verbunden ist, über eine insgesamt mit 16 bezeichnete hintere Anlenkung verbunden, die detailliert weiter unten in Verbindung mit der Beschreibung der Fig. 5 erläutert wird.

Am Gleitelement 9 des vorderen Querspriegels 4 ist ein Antriebskabel 18 befestigt, das mit einem, in der Mitte des vorderen Querholms des Dachrahmens 11 angeordneten Antrieb 19 in Eingriff steht und zur Übertragung von Zug- und Druckkräften drucksteif am Dachrahmen 11 geführt ist.

Die Gliederbandelemente 14 bzw. 13 bilden miteinander im Bereich der Faltspriegel 6a, 6b, 6c einfache scharnierartige Nebengelenke 27. Am vorderen Querspriegel 4 sowie an den Zwischenspriegeln 7a, 7b, 7c sind sie einzeln an speziell ausgebildeten Lagern angelenkt und bilden mit ihren zwei einander benachbarten Lagenungen 29, 30 (Fig. 6 und 7) ein Hauptgelenk 28.

In Fig. 2 sind diese Hauptgelenke nur schematisch angedeutet, detailliert ist ihre Ausbildung in den Fign. 6 und 7 dargestellt. Fig. 2 zeigt, daß der hintere Querspriegel 5 über eine Einstellvorrichtung 17 mit dem hinteren Bereich der festen Dachhaut 1 verbunden ist. Diese Einstellvorrichtung 17 erlaubt mittels eines Gewindes mit entsprechenden Kontermuttern eine Einstellung des hinteren Querspriegels 5 in Fahrzeuglängsrichtung zur Spannung des Verdecks.

Wie Fig. 2 ferner zu entnehmen ist, ist im Bereich des hinteren Querspriegels ein Verdeckausheber 36 federnd gelagert, der sich stets an die Innenseite des Verdecks 3 anlegt und ausgehend von seiner mit 36' bezeichneten Grundposition bei geschlossenem Verdeck bei Öffnung desselben dafür sorgt, daß sich im Bereich hinter der letzten Hauptfalte, ausgehend vom hinteren Faltspriegel 6b, eine zusätzliche kleine Nebenfalte des Verdecks 3 bildet, wodurch ein Einquetschen des Verdecks 3 zwischen hinterem Zwischenspriegel 7c und hinterem Querspriegel 5 wirksam verhindert wird.

Der Fig. 2 ist zu entnehmen, daß die Anordnung des vorderen Faltspriegels 6a bezüglich des unmittelbar benachbarten Nebengelenks 27 in Abweichung zu den dahinterliegenden Faltspriegel 6b und 6c so gewählt ist, daß bei geöffnetem Verdeck 3 der vordere Faltspriegel 6a unterhalb des ihm zugeordneten Nebengelenks 27, die Faltspriegel 6b und 6c dagegen oberhalb der ihnen zugeordneten Nebengelenke 27 liegen. Durch diese Anordnung ist gewährleistet, daß auch die beiden hinteren Verdeckschlaufen in hinreichender Höhe über der festen Dachhaut 1 gehalten werden.

Aus Fig. 3 ist die Verriegelung des Faltdaches gegenüber dem Dachrahmen 11 ersichtlich. Ein am vorderen Querspriegel 4 angelenktes Schließteil 15, an dem auch die Vorderkante des Verdecks 3 befestigt ist, fährt gegen Ende der Schließhewegung des Verdecks 3 mit einem Riegelbolzen 20 in eine am vorderen Querholm des Dachrahmens 11 befestigte Kulisse 21 und wird bei weiterem Nachvornefahren durch deren abfallende Kulissenbahn nach unten gezogen. Dabei legt sich die Vorderkante des Schließteils 15 mit der Vorderkante des Verdecks 3 von oben her dichtend auf den Dachrahmen 11. Bei einem Öffnungsvorgang gleitet der Riegelbolzen 20 entsprechend umgekehrt an der ansteigenden Flanke der Kulisse 21 nach oben, hebt dabei die Vorderkante des Verdecks von der festen Dachhaut 1 ab und gibt somit das gesamte Verdeck 3 für die weitere Öffnung frei.

In Fig. 4 ist die Lagerung eines Faltspriegels 6a in dessen Gleitelement 10a für den Fall eines größeren Verschiebeweges des Gleitelements bis zum Austreten aus der Aussparung 12a schematisch dargestellt. Das Gleitelement 10a befindet sich in einer gegenüber der Grundposition bei geschlossenem Dach um einen Weg X₁ (Fig. 1) nach hinten verfahrenen Position, bei der es eine Aussparung 12a in einer nach oben weisenden Abdeckung der Führungsschiene 8 erreicht hat. Das Ende des Faltspriegels 6a hat sich von seiner gestrichelt angedeuteten Position bei diesem kurzen Verschiebeweg um ein geringes Stück weiter nach außen verlagert. Während im Endbereich des Faltspriegels 6a an einer Außenwand desselben eine muldenförmige Vertiefung vorgesehen ist, weist das Gleitelement in der dieser Mulde zugewandten Seitenwand der Gleitführung 23 ein Rastelement 24 in Form eines Kugeldruckstücks auf, das mit einer federnd vorgespannten Kugel, die vollständig in das Gleitelement 10a eindrückbar ist, in dieser Position des Faltspriegels 6a in die Mulde einrastet und dadurch Gleitelement 10a und Faltspriegel 6a unverschiebbar miteinander verrastet. Durch diese Verrastung wird sichergestellt, daß das mit dem jeweiligen Faltspriegel 6a nach oben schwenkende Gleitelement 10a (Fig. 2) beim Schließvorgang auf Grund der eindeutigen Position mit Sicherheit wieder in die Aussparung 12a der Führungsschiene 8 eintaucht. Eine derartige Anordnung mit verrastenden Gleitelementen 10a, 10b, 10c ist besonders für eine Variante geeignet, bei der sich die erste Falte hinten bildet, und bei der die vorderen Faltspriegel 6a, 6b bis zu einer weit hinten liegenden Aussparung der Führungsschienen verfahren werden, bevor sie ausheben.

In Fig. 5 ist die hintere Anlenkung des hinteren Zwischenspriegels 7c am hinteren Querholm des Dachrahmens 11 schematisch gezeigt. Am hinteren Zwischenspriegel 7c ist an dessen der Vorderkante der Dachöffnung 2 zugewandten Seite ein Gliederbandelement 13 analog zu der weiter unten folgenden Beschreibung der Fign. 6 und 7 gelagert. An einem der Hinterkante der Dachöffnung 2 zugewandten Teil 26c eines am hinteren Zwischenspriegel 7c befestigten Trägers ist eine Buchse 16a mit einem in ihrem Inneren quer verlaufenden Bolzen angeordnet. Diese Buchse 16a taucht in eine Buchse 16b von etwas größerem Durchmesser ein, die am hinteren Querholm des Dachrahmens 11 befestigt ist und in ihrem Inneren ebenfalls einen quer-verlaufenden Lagerbolzen aufweist. An beiden Lagerbolzen ist jeweils ein Ende einer Zugfeder 16c eingehängt, die die Buchse 16a mitsamt dem daran befestigten hinteren Zwischenspriegel 7c gegen einen von der Stirnfläche der Buchse 16b gebildete Anschlagfläche 16d zieht. Der Weg, den die Buchse 16a bis zum Anschlag an die Anschlagfläche 16d der Buchse 16b zurücklegt, ist mit X₁ bezeichnet. Diese Anordnung dient dazu, bei beginnender Verdecköffnung über die in gestreckter Lage steife Verbindung durch die Gliederbandelemente 13 und 14 alle Spriegel 4, 6a, 6b, 6c, 7a, 7b, 7c um diesen Betrag X₁ nach hinten zu ziehen, der den Gleitelementen 10a, 10b, 10c der Faltspriegel 6a, 6b, 6c ermöglicht, sich unter die betreffende Aussparung 12a, 12b, 12c der Führungsschiene 8 zu bewegen. Beim Schließen des Verdecks 3 werden die Gleitelemente 10a, 10b, 10c durch die Feder 16c solange hinten gehalten, bis sie in die Aussparung 12a, 12b, 12c eingetaucht sind.

In Fig. 6 und 7 ist ein Hauptgelenk 28 im Bereich des ersten Zwischenspriegels 7a im Detail zur Verdeutlichung der selbsttätig geregelten Faltenbildung gezeigt. Am Zwischenspriegel 7a ist ein Träger 26 derart befestigt, daß er diesen unter Anpassung an dessen Form von unten her umgibt. Etwa auf halber Höhe des Zwischenspriegels 7a weist der Träger 26 nach vorne und nach hinten weisende horizontale Schenkel 34 bzw. 35 auf, an denen kreisringförmige Lager 29 bzw. 30 befestigt sind. In die Augen der Lager 29 bzw. 30 greifen Lagerbolzen ein, die mit den Gliederbandelementen 13 bzw. 14 verbunden sind. An den von vorne kommenden Gliederbandelement 13 ist ein als Kreisringsegment ausgebildetes Sperrglied 33 vorgesehen, das die kreisringförmige Lagerung 29 an einen Teil des Umfangs umgibt. Am nach hinten führenden Gliederbandelement 14 ist ein ebenso kreisring-segmentförmiges Sperrglied 32 vorgesehen, das den Kreisring des Lagers 30 an einen Teil des Umfangs umgibt. Der Träger 26 und der Zwischenspriegel 7a weisen an ihrer Unterseite eine Ausklinkung auf, durch die ein nach oben weisendes Lagerteil einer insgesamt mit 31 bezeichneten Sperrklinke ins Innere des Zwischenspriegels 7a hinein-geführt und dort schwenkbar gelagert ist. Die Sperrklinke 31 ist nach Art einer Wippe ausgebildet und weist außer dem Lagerteil 31a zwei sich in Richtung auf die Lager 29 bzw. 30 zu erstreckende Schenkel 31b bzw. 31c auf.

Sperrklinke 31 und Lager 29 bzw. 30 sind von ihren Abmessungen so aufeinander abgestimmt, daß jeweils nur einer der Schenkel 31b bzw. 31c mit dem Umfang des kreisringförmigen Lagers 29 bzw. 30 in Berührung geraten kann, während der andere Schenkel 31c bzw. 31b auf den Umfang des Sperrgliedes 32 bzw. 33 anliegt. Ausgehend von der in Fig. 6 gezeigten Grundstellung in gestreckter Lage des Gliederbandes, bei der die Sperrklinke 31 die in Fig. 6 gezeigte Lage einnimmt und dadurch durch Anlage des Schenkels 31b am Außenumfang des Sperrgliedes 33 ein ungehindertes Aufschwenken des Gliederbandelementes 13 ermöglicht, gleichzeitig durch Anliegen des Schenkels 31c am Umfang des Kreisringes des Lagers 30 jedoch durch Blockieren des Sperrgliedes 32 ein Auffalten des Gliederbandelementes 14 verhindert, ist in Fig. 7 das gleiche Hauptgelenk nach Bildung der ersten Falte gezeigt. Dabei hat sich das Gliederbandelement 13 um das Lager 29 in einer Schwenkbewegung nach oben bewegt. Das dabei mitschwenkende Sperrglied 33 ermöglicht nach Beendigung der Faltenbildung des Gliederbandelementes 13 dem Schenkel 31b der Sperrklinke 31 die Annäherung an den Umfang des Kreisringes des Lagers 29. Durch die dabei erfolgende geringfügige Schwenkbewegung der Sperrklinke 31 wird deren rechter Schenkel 31c außer Eingriff mit dem Sperrglied 32 gebracht, wodurch ein Auffalten des Gliederbandelementes 14 ermöglicht wird. Die Faltenbildung wird somit nur durch die Sperrglieder 33 bzw. 32 und die Sperrklinke 31 selbsttätig so gesteuert, daß sich beginnend von vorne eine weiter hinten liegende Falte nur bilden kann, wenn die davorliegende Falte sich vollständig aufgestellt hat.

Es soll anschließend der Bewegungsablauf bei der Öffnung eines Faltdaches gemäß der ersten Austührungsform, wie in den Fign. 1 bis 7 gezeigt, beschrieben werden. Ausgehend von der Grundposition mit geschlossenem Verdeck gemäß Fig. 1 wird der Antrieb 19 in eine Rechtsdrehung versetzt, wodurch das Antriebskabel 18 den vorderen Querspriegel 4 mittels des diesen zugeordneten Gleitelementes 9 nach hinten zu schieben beginnt. Dabei fährt zum einen der Riegelholzen 20, wie in Fig. 3 gezeigt, an der Kulisse 21 nach oben und schwenkt das Schließteil 15 in eine schräg nach oben gekippte Lage. Zum anderen wird der hinteren Anlenkung 16 mit der darin enthaltenen Zugfeder 16c auf Grund der steifen Ausführung der Gliederbandkette 13, 14 ermöglicht, den gesamten Verband aus Spriegeln 4, 6a, 6b, 6c, 7a, 7b, 7c und Gliederbandketten 13, 14 um einen Betrag X₁ (Fig. 1) nach hinten zu ziehen, bei dem die Gleitelemente 10a, 10b, 10c der Faltspriegel 6a, 6b, 6c unter die Aussparungen 12a, 12b, 12c in den Führungsschienen 8 geraten. Die Faltspriegel 6a, 6b, 6c sind somit frei für ein Ausschwenken aus der Führungsschiene 8 nach oben.

Bei einem weiteren Nachhintenschieben des vorderen Querspriegels 4 falten sich die Gliederbandelemente 14 und 13 zwischen vorderem Querspriegel 4 und erstem Zwischenspriegel 7a nach oben auf und nehmen dabei den im Bereich des Nebengelenkes 27 angeordneten ersten Faltspriegels 6a mit nach oben. Ist dieser Vorgang der Bildung der ersten Falte abgeschlossen (Fig. 7), so beginnt nach Freigabe des Sperrgliedes 32 durch die Sperrklinke 31 in gleicher Weise die Bildung der zweiten Falte zwischen erstem Zwischenspriegel 7a und zweitem Zwischenspriegel 7b. Wenn diese abgeschlossen ist, wird bei weiterem Nachhintenschieben des vorderen Querspriegels 4 zwischen zweitem Zwischenspriegel 7b und letztem Zwischenspriegel 7c in gleicher Weise die dritte Falte gebildet. Die danach entstehende Endlage mit vollständig aufgefaltetem Verdeck ist in Fig. 2 dargestellt.

Der Schließvorgang erfolgt ebenso geregelt in umgekehrter Weise.

Dies wird dadurch gewährleistet, daß an den Hauptgelenken 28 der ersten und zweiten Falte die Schenkel 31b der Sperrklinken 31 noch in der in Fig. 7 gezeigten Weise am Umfang des Lagers 29 anliegen und dadurch mittels des Sperrgliedes 33 einer Schwenkbewegung des am Lager 29 angelenkten Gliederbandelementes 13 verhindern, während im Bereich des hinteren Zwischenspriegels 7c auf Grund des Fehlens einer solchen Sperrklinke ein ungehindertes Zurückbilden der dritten Falte gewährleistet ist. Die Zugfeder 16c der hinteren Anlenkung 16 sorgt beim Schließen dafür, daß die Faltspriegel 6a, 6b, 6c mit den daran befestigten Gleitelementen 10a, 10b, 10c beim Schließen eindeutig in die Aussparungen 12a, 12b, 12c der Führungsschiene 8 eintauchen. Erst im letzten Teil der Schließbewegung, bei dem sich auch der Riegelbolzen 20 über die Kulisse 21 nach unten bewegt und das Schließteil 15 in bündige Anlage am Rahmen 11 bringt, wird die Zugfeder 16c wieder in ihre gespannte Ausgangslage gemäß Fig. 5 zurückbefördert.

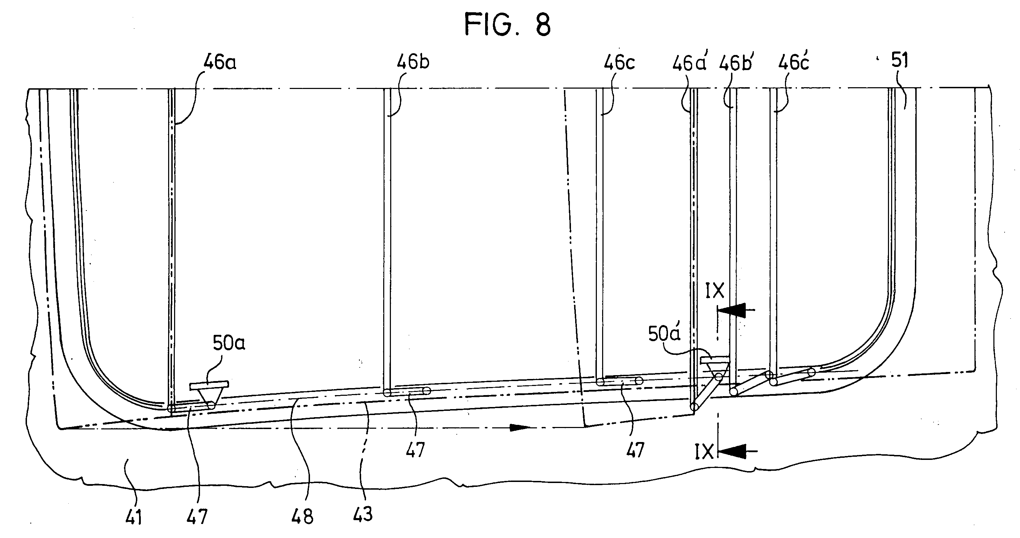

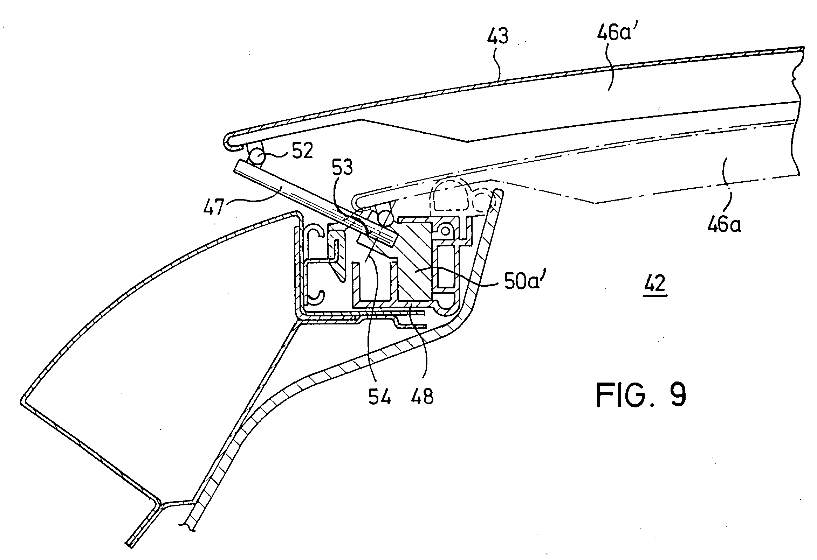

In den Fig. 8 und 9 ist eine zweite Variante für ein Faltdach mit trapezförmigen Führungsschienen dargestellt. Bei diesem ist in eine feste Dachhaut 41 ein Dachrahmen 51 eingesetzt, an dem zu beiden Seiten nichtparallele Führungsschienen 48 angeordnet sind. In diesen Führungsschienen 48 sind Gleitelemente 50 längs verschiebbar geführt, von denen nur das vordere Gleitelement 50a, an dem der vordere Querspriegel 44 angelenkt ist, dargestellt ist. Das in der zweiten Variante gezeigte Faltdach verfügt darüberhinaus analog zum ersten Ausführungsbeispiel nicht gezeigte Faltspriegel und einen nicht gezeigten hinteren Querspriegel. Der gesamte Spriegelverbund wird auch hier durch eine nicht gezeigte Gliederbandkette analog zum ersten Ausführungsbeispiel bezüglich seiner Faltenbildung gesteuert. In Abweichung zum ersten Ausführungsbeispiel werden bei dieser zweiten Variante jedoch der vordere Querspriegel 44 und die Zwischenspriegel 46 nach oben herangehoben.Dabei verbleiben die Gleitelemente 50 in den Führungsschienen 48. Die Gleitelemente weisen, wie am Beispiel des Gleitelements 50a in Fig. 9 gezeigt, einen schräg nach oben und außen gerichteten Schlitz 53 auf, in dem ein Ausstellhebel 47 an einer Drehachse 54 schwenkbar gelagert ist. In der in Fig. 8 im linken Teil gezeigten Grundposition bei geschlossenem Verdeck liegt der Ausstellhebel 47 parallel zu den Führungsschienen 48 mit seinem freien Ende nach vorne gerichtet im Schlitz 53. Das freie Ende des Ausstellhebels 47 ist mittels eines Kugelgelenkes 52 am äußeren Ende des Zwischenspriegels 46a befestigt. Wird bei diesem Faltdach mittels des nicht gezeigten Gliederbandsystems durch die entsprechenden Sperrglieder und Sperrklinken im Hauptgelenk eines Zwischenspriegels die Bildung der ersten Falte ermöglicht, so führt dabei der Ausstellhebel 47 das äußere Ende des Zwischenspriegels 46a durch seine Führung in Schlitz 53 nach außen und oben in die in Fig. 9 gezeigte Lage. Diese Position ist auch im rechten Teil der Fig. 8 schematisch dargestellt. Wie dort zu ersehen ist, wird die unterschiedliche Breite der Zwischenspriegel 46a, 46b und 46c dort durch ein unterschiedlich starkes Ausschwenken der mit ihnen über Kugelgelenke 52 im Eingriff stehenden Ausstellhebel 47 ausgeglichen. Zur Unterscheidung der in ein- und derselben Figur dargestellten verschiedenen Positionen der Zwischenspriegel ist für den ausgestellten Zustand das jeweilige Bezugszeichen mit einem Hochkomma versehen (siehe 46a', 50a' in den Fign. 8 und 9).

Wie in Fig. 9 zu sehen, ist bei dieser Variante mit anhebbaren Zwischenspriegeln das Verdeck an diesen eventuell zusätzlich zur Befestigung an den Faltspriegeln befestigbar.

Mittels der vorstehend beschriebenen beiden Varianten ist ein Faltdach realisiert worden, das mit einfachen Mitteln eine geregelte Faltenbildung auch bei einem Dach mit nicht parallelen Führungsschienen und einer starken Dachwölbung ermöglicht. Details dieses Daches, wie das Faltbandsystem oder der Verdeckausheber, sind zwar besonders vorteilhaft für die hier beschriebenen Faltdächer verwendbar, sie sind jedoch darüber-hinaus auch bei Faltdächern mit parallelen Führungsschienen und einer anderen Ausstellmechanik vorteilhaft einsetzbar. Bei den vorstehend beschriebenen Dächern mit nicht parallelen Führungsschienen sind sie deshalb mit besonderem Vorteil einsetzbar, weil die für eine geregelte Faltenbildung bei üblichen Dächern verwendeten zusätzlichen Steuerelemente bezüglich ihrer Anordnung in nicht parallelen oder stark gewölbten Führungsschienen zusätzliche Probleme schaffen würden, die mittels des beschriebenen faltbaren Gliederbandes durch deren Verlagerung zur Mitte des Daches hin gar nicht erst auftreten. Der Verdeckausheber ist ebenfalls bei dem hier dargestellten Dach besonders vorteilhaft einsetzbar, da ein Zusammenwirken von nicht parallelen Führungsschienen und einer in Fahrtrichtung vorhandenen starken Dachwölbung am ehesten zu einer ungeregelten Faltenbildung mit Einquetschen von Verdeckfalten führen könnte.

| **Bezugszeichenliste** | | | |
|---|---|---|---|
| 1 | feste Dachhaut | 31 | Sperrklinke |
| 2 | Dachöffnung | 32 | Sperrglied (an 14) |
| 3 | Verdeck | 33 | Sperrglied (an 13) |
| 4 | vorderer Querspriegel | 34 | Schenkel (an 26) |
| 5 | hinterer Querspriegel | 35 | Schenkel (an 26) |
| 6a,b,c | Faltspriegel | 36 | Verdeckausheber |
| 7a,b,c | Zwischenspriegel | 41 | feste Dachhaut |
| 8 | Führungsschienen | 42 | Dachöffnung |
| 9a,b,c | Gleitelemente (für 4, 7a,b,c) | 43 | Verdeck |
| 10a,b,c | Gleitelemente (für 6a,b,c) | 44 | vorderer Querspriegel |
| | | 46 a,b,c | Faltspriegel |
| 11 | Dachrahmen | 47 | Ausstellhebel |
| 12a,b,c | Aussparungen | 48 | Führungsschiene |
| 13 | Gliederhand | 50 | Gleitelement |
| 14 | Gliederband | 51 | Dachrahmen |
| 15 | Schließteil | 52 | Kugelgelenk |
| 16 | hintere Anlenkung | 53 | Schlitze |
| 17 | Einstellvorrrichtung | 54 | Drehachse |
| 18 | Antriebskabel | | |
| 19 | Antrieb | | |
| 20 | Riegelbolzen | | |
| 21 | Kulisse | | |
| 22 | Lagerungen (in 9a,b,c) | | |
| 23 | Lagerungen (in 10a,b,c) | | |
| 24 | Rastmechanismus | | |
| 25 | Dachmittenlängsachse | | |
| 26 | Träger | | |
| 27 | Nebengelenk | | |
| 28 | Hauptgelenk | | |
| 29 | Lager | | |
| 30 | Lager | | |

## Patentansprüche

1. Faltdach eines Fahrzeuges zum wahlweisen Verschließen oder wenigstens teilweisen Freigeben einer in einer festen Dachhaut (1) vorgesehenen Dachöffnung (2), mit
- einem Verdeck (3) aus flexiblen Material, das an einem vorderen Querspriegel (4) und einem hinteren Querspriegel (5) sowie wenigstens einem zwischen diesen angeordneten Faltspriegel (6a, 6b, 6c) befestigt ist,
- Zwischenspriegeln (7a, 7b, 7c), die zwischen vorderem Querspriegel (4) und einem vorderen Faltspriegel (6a) sowie zwischen zwei benachbarten Faltspriegeln (6a, 6b, 6c) und zwischen einem hinteren Faltspriegel (6c) und dem hinterem Querspriegel (5) angeordnet sind,
- Führungsschienen (8), die sich seitlich zu beiden Seiten der Dachöffnung (2) an einem die Dachöffnung (2) umgebenden Dachrahmen (11) erstrecken, in denen bei geschlossenem Verdeck (3) alle Falt- und Zwischenspriegel (6a, 6b, 6c; 7a, 7b, 7c) sowie der vordere Querspriegel (4) an verschiebbaren Gleitelementen (9; 9a, 9b, 9c; 10a, 10b, 10c) geführt sind und die an ihrer Oberseite wenigstens eine Aussparung (12a, 12b, 12c) für den Durchtritt der sich beim Auffalten des Verdecks (3) über die feste Dachhaut (1) erhebenden Faltspriegel (6a, 6b, 6c) aufweisen, und mit
- zwei Ketten aus Gliederbändern (13, 14), die zu beiden Seiten der Dachmittenlängsachse (25) parallel zueinander angeordnet sind und je zwei benachbarte Spriegel (4, 6a, 7a, 6b, 7b, 6c, 7c) gelenkig miteinander verbinden,
**dadurch gekennzeichnet**, daß die Führungsschienen (8) zur Anpassung an eine der Kontur der festen Dachhaut (1) angeglichene trapezförmige Dachöffnung (2) nicht parallel laufend angeordnet sind und die Gleitelemente (9, 9a, 9b, 9c; 10a, 10b, 10c) zusätzlich zu ihren mit den Führungsschienen (8) im Eingriff stehenden Gleitführungen Lagerungen (22, 23) aufweisen, an denen sich die Spriegel (4, 6a, 6b, 6c; 7a, 7b, 7c) bei einer Bewegung von der breiten zur schmalen Stirnseite der Dachöffnung hin relativ zu den Gleitelementen nach außen bewegen.

2. Faltdach gemäß Anspruch 1, **dadurch gekennzeichnet**, daß die Lagerungen (22, 23) quer zur Fahrzeuglängsachse verlaufende Führungen umfassen.

3. Faltdach gemäß Anspruch 1, **dadurch gekennzeichnet**, daß Lagerungen an den Gleitelementen (50a, 50b, 50c) der Zwischenspriegel (46a, 46b, 46c) als Schlitze (53) ausgebildet sind, in denen Ausstellhebel (47) mit ihrem einen Ende drehbar (bei 54) gelagert sind, die mit ihrem anderen Ende nahe dem äußeren Ende der Zwischenspriegel (46a, 46b, 46c) angelenkt sind und die in Öffnungsrichtung des Verdecks (43) mit einer quer zur Fahrzeuglängsachse gerichteten Komponente und optional einer nach oben gerichteten Komponente bewegbar sind.

4. Faltdach nach Anspruch 1 oder 2, **dadurch gekennzeichnet**, daß die Führungsschienen (8) in Öffnungsrichtung des Verdecks (3) für jedes der die Faltspriegel (6a, 6b, 6c) führenden Gleitelemente (10a, 10b, 10c) um einen geringen Weg (x₁) von deren Grundposition bei geschlossenem Verdeck versetzt eine Aussparung (12a, 12b, 12c) aufweisen.

5. Faltdach nach einem der Ansprüche 1, 2 oder 4, **dadurch gekennzeichnet**, daß die Faltspriegel (6a, 6b, 6c) mit den ihnen zugeordneten Gleitelementen (10a, 10b, 10c) bei Erreichen der Aussparung (12a, 12b, 12c) vor dem Abheben aus den Führungsschienen (8) mittels eines Rastmechanismus' (24) verrastet werden.

6. Faltdach gemäß Anspruch 5, **dadurch gekennzeichnet**, daß als Rastmechanismus ein selbsttätig arbeitender, durch eine quer zur Einrastrichtung aufgebrachte Kraft entriegelbarer Kugeldruckmechanismus (24) verwendet wird.

7. Faltdach nach einem der Ansprüche 4 bis 6, **dadurch gekennzeichnet**, daß der hintere Querspriegel (5) mit der festen Dachhaut (1) verbunden ist und mit dem hinteren Zwischenspriegel (7c) über eine in Öffnungsrichtung des Verdecks (3) wirkenden Zugfeder (16c) verbunden ist, die letzteren bei Beginn der Verdecköffnung um den Weg (X₁) gegen einen Anschlag (16d) nach hinten zieht.

8. Faltdach nach Anspruch 7, **dadurch gekennzeichnet**, daß die Zugfeder (16c) über die Ketten aus Gliederbändern (13, 14) bei einem Lösen des vorderen Querspriegels (4) vom Dachrahmen (11) alle Faltspriegel-Gleitelemente (10a, 10b, 10c) unter die ihnen zugeordnete Aussparung (12a, 12b, 12c) zieht.

9. Faltdach nach einem der vorhergehenden Ansprüche, **dadurch gekennzeichnet**, daß sich von zwei benachbarten Gliederbandelementen (13, 14) gebildeten Nebengelenke (27) außer heim vorderen Faltspriegel (6a) im aufgefalteten Zustand unterhalb der Faltspriegel (6b, 6c) befinden.

10. Faltdach, insbesondere nach einem der vorhergehenden Ansprüche, **dadurch gekennzeichnet**, daß zwischen hinterem Zwischenspriegel (7c) und hinterem Querspriegel (5) ein vorzugsweise an letzterem (5) gelagerter, mit einer nach oben gerichteten federnden Vorspannung an der Innenseite des Verdecks (3) anliegender, ein Einquetschen des hinteren Verdeckteils beim Falten verhindernder Verdeckausheber (36) vorgesehen ist.

11. Faltbares Gliederband, insbesondere zur Verwendung in einem Faltdach nach einem der vorhergehenden Ansprüche, **dadurch gekennzeichnet**, daß es aus einer Kette von flachen in sich steifen streifenförmigen Gliedern (13, 14) besteht, von denen je zwei benachbarte abwechseln über ein einfaches scharnierartiges Nebengelenk (27) oder über ein Hauptgelenk (28) verbunden sind, das für jedes der daran angelenkten Glieder (14, 13) ein an einem Träger (26) befestigtes Lager (29, 30) aufweist sowie eine zwischen diesen Lagern (29, 30) angeordnete wippenförmige Sperrklinke (31) umfaßt, die das in Bewegungsrichtung hintere Glied (14) durch Zusammenwirken mit einem an diesem im Bereich des Lagers (30) vorgesehenen Kreisring-Segment-förmigen Sperrglied (32) solange in einer gestreckten Lage gegen ein Auffalten blockiert, bis das in Bewegungsrichtung davor liegende Glied (13) durch seine eigene Auffaltbewegung ein ebensolches Sperrglied (33) in eine Position gedreht hat, die eine Schwenkbewegung der Sperrklinke (31) ermöglicht.

12. Faltbares Gliederband nach Anspruch 11, **dadurch gekennzeichnet**, daß die Nebengelenke (27) an den Faltspriegeln (6a, 6b, 6c) und die Hauptgelenke (28) an den Zwischenspriegeln (7a, 7b) angeordnet sind.

13. Faltbares Gliederhand nach Anspruch 12, **dadurch gekennzeichnet**, daß der Träger (26) des Hauptgelenks (28) den jeweiligen Zwischenspriegel (7a, 7b, 7c) unter Anpassung an dessen Form von unten her umgibt und zwei sich horizontal etwa in halber Höhe des Zwischenspriegels nach vorn und hinten erstreckende Schenkel (34, 35) aufweist, an denen je ein Lager (29, 30) befestigt ist.

14. Faltbares Gliederband nach Anspruch 13, **dadurch gekennzeichnet**, daß die Sperrklinken (31) am Träger (26) gelagert sind.

15. Faltbares Gliederband nach Anspruch 13, **dadurch gekennzeichnet**, daß die Sperrklinken (31) mittels einer Ausklinkung an deren Unterseite an den Zwischenspriegeln (7a, 7b) gelagert sind.
